# EUROPÄISCHE PATENTSCHRIFT

(11) **EP 3 544 809 B1**
(45) Veröffentlichungstag und Bekanntmachung des Hinweises auf die Patenterteilung: **14.06.2023**
(21) Anmeldenummer: 17791087.4
(22) Anmeldetag: 27.10.2017
(51) Int. Cl.: B32B 17/10, C03C 27/12

(54) **VERFAHREN ZUR HERSTELLUNG EINER GEBOGENEN VERBUNDGLASSCHEIBE MIT EINER DÜNNEN GLASSCHEIBE**
METHOD FOR THE PRODUCTION OF A CURVED LAMINATED GLASS PANE WITH A THIN GLASS SHEET
PROCÉDÉ DE FABRICATION D'UNE VITRE COMPOSITE CINTRÉE COMPRENANT UNE VITRE MINCE

(30) Priorität: 24.11.2016 EP 16200376
(43) Veröffentlichungstag der Anmeldung: 02.10.2019
(73) Patentinhaber: SAINT-GOBAIN GLASS FRANCE, 92400 Courbevoie (FR)
(72) Erfinder: GIER, Stephan, 66359 Bous (DE); LÜCKE, Stefan, 52477 Alsdorf (DE); VAN DER MEULEN, Uwe, 52385 Nideggen (DE); VON DER WEIDEN, Ingo, 52074 Aachen (DE); BROCKER, Richard, 41068 Mönchengladbach (DE)
(74) Vertreter: Feist, Florian Arno
(86) Internationale Anmeldenummer: PCT/EP2017/077562
(87) Internationale Veröffentlichungsnummer: WO 2018/095693

(56) Entgegenhaltungen:
- EP-A1- 3 078 488
- EP-A1- 3 138 689
- WO-A1-2012/177426
- WO-A1-2015/092385
- WO-A1-2015/158464
- WO-A1-2016/091435
- US-A1- 2014 141 206

## Beschreibung

Die Erfindung betrifft ein Verfahren zur Herstellung einer gebogenen Verbundglasscheibe, eine damit hergestellte Verbundglasscheibe und deren Verwendung.

Verbundglasscheiben sind als Fahrzeugverglasungen gebräuchlich, insbesondere als Windschutzscheiben oder Dachscheiben. Sie bestehen aus zwei Glasscheiben, die über eine thermoplastische Zwischenschicht miteinander verbunden sind. Typische Dicken der Glasscheiben in herkömmlichen Verbundglasscheiben betragen etwa 2 mm. Verglasungen im Fahrzeugbereich sind häufig gebogen. Die relativ dicken Einzelglasscheiben herkömmlicher Verbundglasscheiben werden dabei zunächst auf Erweichungstemperatur erhitzt und gebogen. Nach dem Erstarren weisen sie eine formstabile Biegung auf und werden dann zur Verbundglasscheibe laminiert. Um die Form der beiden zu verbindenden Glasscheiben optimal aufeinander abzustimmen, können sie paarweise aufeinanderliegend, simultan kongruent gebogen werden. Solche Biegeverfahren sind beispielsweise aus EP 1 836 136 A1, EP 1 358 131 A1, EP 2 463 247 A1 und EP 2 463 248 A1 bekannt.

Um das Gewicht der Verglasungen zu reduzieren, gibt es Bemühungen, die Dicke der Einzelglasscheiben zu reduzieren, wobei trotzdem die Anforderungen an die Stabilität und Bruchfestigkeit von Fahrzeugscheiben erfüllt werden müssen. So werden vermehrt Verbundglasscheiben vorgeschlagen, die eine dünne Glasscheibe mit einer Dicke von kleiner 1,5 mm oder sogar kleiner 1 mm aufweisen. Lediglich beispielhaft sei dabei auf EP 2 421 704 A1, US 7 070 863 B2, DE 3 919 290 A1, WO 2015/058885 A1, WO 2015/158464 A1 und WO 2016/091435 A1 verwiesen. Zur Steigerung der Stabilität können die dünnen Glasscheiben chemisch vorgespannt sein.

Die Verwendung dünner Glasscheiben macht daran angepasste Herstellungsverfahren erforderlich. Ein klassisches Biegen der dünnen Glasscheiben ist häufig schwierig. Zum einen sind die dünnen Glasscheiben bei der Handhabung bruchanfällig, zum anderen weisen sie oft chemische Zusammensetzungen mit hohen Erweichungstemperaturen auf, was das Biegen energieintensiv macht. Sollen eine dünne und eine dicke Glasscheibe miteinander laminiert werden, so weisen sie zudem in der Regel unterschiedliche Zusammensetzungen auf, wobei für die dicke Glasscheibe das verbreitete und günstige Kalk-Natron-Glas verwenden wird und für die dünne Glasscheibe dagegen eine Glaszusammensetzungen, die hinsichtlich der Eignung zum chemischen Vorspannen ausgewählt ist. Die damit einhergehenden unterschiedlichen Erweichungstemperaturen der beiden Scheiben machen ein paarweises Biegen schwierig oder unmöglich.

Dünne Glasscheiben sind allerdings bereits bei Raumtemperatur so flexibel, dass sie direkt beim Laminieren kaltgebogen werden können und auf das vorhergehende Biegen in eine formstabile Form verzichtet werden kann. Werden die Glasscheiben und die Zwischenschicht jedoch einfach übereinander gestapelt, so resultiert aus der nicht aufeinander abgestimmten Form der Scheiben und der Rückstellkraft der kaltgebogenen dünnen Glasscheibe ein nicht über die Gesamtfläche konstanter Anpressdruck. Dies verringert die Qualität der Verbundgläser, welche zu optischen Fehlern und Delamination neigen.

WO 2015/158464A1 und US 2014/141206 A1 offenbaren Verfahren zur Herstellung einer Verbundglasscheibe, wobei eine dünne Glasscheibe an die Form einer vorgebogenen dickeren Glasscheibe angepasst und dabei kaltgebogen wird.

EP 3 078 488 A1 offenbart ein Verfahren zur Herstellung einer Verbundglasscheibe, wobei eine vorgebogene Glasscheibe mittels Saugnäpfen positioniert wird, eine dünnere Glasscheibe mit einem als Pressstempel wirkenden weiteren Unterdruckhalter an die vorgebogene Glasscheibe angepresst wird and anschließend mit Hilfe von IR-Strahlung die Zwischenschicht aufgewärmt wird und die beiden Glasscheiben verbunden werden.

Der vorliegenden Erfindung liegt die Aufgabe zugrunde, ein verbessertes Verfahren zur Herstellung von gebogenen Verbundglasscheiben mit einer dünnen Glasscheibe bereitzustellen. Dabei soll auf ein Heißbiegen der dünnen Glasscheibe verzichtet werden und dennoch eine hohe optische Qualität und mechanische Verbundstabilität gewährleistet werden.

Die Aufgabe der vorliegenden Erfindung wird erfindungsgemäß durch ein Verfahren zur Herstellung einer Verbundglasscheibe gemäß dem unabhängigen Anspruch 1 gelöst. Bevorzugte Ausführungen gehen aus den Unteransprüchen hervor.

Die herzustellende Verbundglasscheibe ist zur Abtrennung eines Innenraums, insbesondere eines Fahrzeuginnenraums, von einer äußeren Umgebung vorgesehen. Sie ist also eine Fensterscheibe, die dafür vorgesehen ist, in eine Fensteröffnung, insbesondere eine Fensteröffnung einer Fahrzeugkarosserie, eingesetzt zu werden. Sie ist gebogen und umfasst eine erste Glasscheibe und eine zweite Glasscheibe, die über eine thermoplastische Zwischenschicht miteinander verbunden sind. Die erste Glasscheibe ist dabei eine dünne Glasscheibe mit einer Dicke bis zu 1 mm. Die zweite Glasscheibe weist eine Dicke von größer oder gleich 1,5 mm auf, wie es für herkömmliche Verbundgläser üblich ist. Die dickere zweite Glasscheibe wird klassisch in ihre endgültige Form vorgebogen. Dazu wird sie auf mindestens ihre Erweichungstemperatur erhitzt und dann verformt, das heißt heißgebogen. Die dünne erste Glasscheibe dagegen wird nicht vorgebogen (im Sinne eines Heißbiegens), sondern beim Anordnen des zu laminierenden Schichtstapels deutlich unterhalb ihrer Erweichungstemperatur aus ihrem planen Ausgangszustand durch mechanischen Druck in die gewünschte gebogene Form gebracht, das heißt kaltgebogen. Dabei werden erfindungsgemäß die definierte Form und ein gleichmäßiger Anpressdruck innerhalb des Schichtstapels durch die Verwendung einer Stützform sichergestellt. Die Stützform gibt die gewünschte Biegung vor und wirkt Rückstellkräften der dünnen, elastischen Glasscheibe entgegen, wodurch der Schichtstapel sicher gehandhabt und mit hoher optischer und mechanischer Qualität laminiert werden kann.

Das erfindungsgemäße Verfahren umfasst mindestens die folgenden Verfahrensschritte:
- Auflegen einer ersten Glasscheibe mit einer Dicke von kleiner oder gleich 1 mm auf eine Stützform, wobei die erste Glasscheibe in eine durch die Stützform festgelegte Form kaltgebogen wird;
- Auflegen mindestens einer thermoplastischen Folie auf die erste Glasscheibe;
- Auflegen einer gebogenen zweiten Glasscheibe mit einer Dicke von größer oder gleich 1,5 mm auf die thermoplastische Folie; und
- Verbinden der ersten Glasscheibe mit der zweiten Glasscheibe über die thermoplastische Folie zu einer Verbundglasscheibe durch Lamination.

Das Auflegen der Glasscheiben und der Folie aufeinander erfolgt flächig kongruent, wobei es auch möglich ist, eine thermoplastische Folie zu verwenden, die größer ist als die Glasscheiben und über diese übersteht, und die überstehenden Teile der Folie nach dem Laminieren abzuschneiden. Die Verfahrensschritte werden bevorzugt in der angegebenen Reihenfolge durchgeführt. Es sind aber auch Abwandlungen denkbar. So ist es möglich, zunächst die thermoplastische Folie auf die erste Glasscheibe aufzulegen und dann beide gemeinsam mit nach unten weisender erster Glasscheibe auf die Stützform aufzulegen. Ebenso ist es möglich, die zweite Glasscheibe auf die thermoplastische Zwischenschicht aufzulegen und anschließend beide mit nach unten weisender thermoplastischer Folie auf die auf der Stützform befindliche erste Glasscheibe abzulegen. Natürlich muss der gesamte Schichtstapel aus erster Glasscheibe, thermoplastischer Folie und zweiter Glasscheibe auf der Stützform angeordnet sein, bevor er weiter gehandhabt und letztendlich laminiert wird.

Die Stützform gibt erfindungsgemäß die gewünschte endgültige Form der Verbundglasscheibe vor. Sie weist eine gebogene Kontaktfläche auf oder Kontaktpunkte, die eine gebogene Fläche aufspannen, wobei die Biegung der Kontaktfläche beziehungsweise der aufgespannten Fläche der gewünschten Biegung der Verbundglasscheibe entspricht. Die erste Glasscheibe und die thermoplastische Folie legen sich an die Kontaktfläche oder die Kontaktpunkte an und werden so in die gewünschte Form gebracht. Da diese Biegung der ersten Glasscheibe deutlich unterhalb ihrer Erweichungstemperatur und bevorzugt bei Umgebungstemperatur ohne aktive Beheizung stattfindet, wird der Biegevorgang als Kaltbiegen bezeichnet. Das Kaltbiegen ist aufgrund der Flexibilität und der elastischen Eigenschaft der dünnen Glasscheibe ohne Glasbruch möglich.

Die Stützform kann grundsätzlich konkav oder konvex ausgebildet sein, ist bevorzugt aber konvex ausgebildet. Das bedeutet, dass die Kontaktfläche der Stützform oder die von den Kontaktpunkten aufgespannte Fläche konvex ist, so dass die zur Stützform hingewandte Oberfläche der ersten Glasscheibe konkav und die von der Stützform abgewandte Oberfläche der ersten Glasscheibe konvex gebogen wird. Mit einer konvexen Stützform wird demnach eine Verbundglasscheibe hergestellt, bei der von der Zwischenschicht abgewandte Oberfläche der dünnen ersten Glasscheibe konkav und die von der Zwischenschicht abgewandte Oberfläche der dickeren zweiten Glasscheibe konvex ausgeformt ist. Da typische Fahrzeugverglasungen eine konvexe außenseitige Oberfläche und eine konkave innenraumseitige Oberfläche aufweisen, ermöglicht die konvexe Stützform folglich Verbundglasscheiben, bei denen die dünne erste Glasscheibe die Innenscheibe ist und die dickere zweite Glasschiebe die Außenscheibe, was üblicherweise aus Gründen der Steinschlag- und Kratzfestigkeit bevorzugt ist. Alternativ ist es aber auch möglich, unter Verwendung einer konkaven Stützform eine Verbundglasscheibe herzustellen, deren Außenscheibe die dünne erste Glasscheibe ist, sollte dies gewünscht sein. Mit Außenscheibe wird im Sinne der Erfindung diejenige Glasscheibe bezeichnet, die dafür vorgesehen ist, in Einbaulage der äußeren Umgebung zugewandt zu sein. Mit Innenscheibe wird diejenige Glasscheibe bezeichnet, die dafür vorgesehen ist, in Einbaulage dem Innenraum zugewandt zu sein. Die Bezeichnungen *außenseitig* und *innenraumseitig* sind ebenso zu verstehen.

Die zweite Glasscheibe weist beim Auflegen auf die Stützform bereits im Wesentlichen ihre endgültige gebogene Form auf. Dazu wird die zweite Glasscheibe vorher in ihrem ursprünglichen planen Ausgangszustand mindestens auf Erweichungstemperatur erhitzt, gebogen und zum Erstarren abgekühlt. Hierzu eignen sich alle gängigen Glasbiegeverfahren, beispielsweise Schwerkraft-, Press- oder Saugbiegen. Die Biegung der zweiten Glasscheibe entspricht im Wesentlichen der Biegung der Kontaktfläche der Stützform.

Das Anlegen der ersten Glasscheibe an die Stützform kann allein unter Druckeinwirkung erfolgen, entweder nur durch die Gewichtskraft der zweiten Glasscheibe oder zusätzlich durch mechanisch von oben ausgeübten Druck. In einer besonders vorteilhaften Ausführung wird die erste Glasscheibe durch Anlegen eines Unterdrucks an die Stützform angesaugt und dadurch gebogen. Hierzu muss die Stützform mit einem Mittel zur Erzeugung eines Unterdrucks ausgestattet oder geeignet verbindbar sein. Mit Unterdruck wird dabei ein Druck bezeichnet, welcher geringer ist als der Umgebungsdruck. Das kann hinsichtlich der Handhabung oder der Bearbeitungsgeschwindigkeit vorteilhaft sein.

Die erfindungsgemäße Stützform kann auf verschiedene Arten ausgebildet sein. In einer bevorzugten Ausgestaltung weist die Stützform eine Auflagefläche für die erste Glasscheibe auf. Wenn die erste Glasscheibe auf die Stützform aufgelegt ist, so steht sie im Wesentlichen vollflächig mit der Auflagefläche in Kontakt. Bereiche der Scheibe können von dem Kontakt zur Auflagefläche ausgenommen sein, beispielsweise eine über die Auflagefläche überstehender Randbereich oder Bereiche der Scheibe, die über Unterbrechungen der Auflagefläche angeordnet sind. Solche Unterbrechungen können sich beispielsweise durch Öffnungen, Löcher oder Durchführungen in der Auflagefläche ergeben, über welche die Stützform bevorzugt verfügt, um eine Saugwirkung auf die erste Glasscheibe auszuüben und sie zum Kaltbiegen an die gebogene Auflagefläche anzusaugen. Die Löcher sind mit einem Mittel zur Erzeugung eines Unterdrucks verbunden, durch das die Saugwirkung erzeugt wird. Bevorzugt stehen mindestens 80 % oder sogar mindestens 90 % der Scheibenoberfläche mit der Auflagefläche in Kontakt. Die Auflagefläche kann gepolstert sein, beispielsweise durch einen Überzug oder eine Auflage aus einem Gewebe.

In einer weiteren bevorzugten Ausgestaltung weist die Stützform eine Mehrzahl von Auflagestiften auf, auf denen die erste Glasscheibe im Wesentlichen punktuell aufliegt. Die Stützform hat dann keine Kontaktfläche im eigentlichen Sinne, sondern eine Mehrzahl von Kontaktpunkten, welche eine gebogene Fläche aufspannen, die der Form der kaltgebogenen Glasscheibe entspricht. Die Kontaktpunkte werden durch den Kontakt der Glasscheibe mit den nach oben weisenden Enden der Kontaktstifte gebildet. Sie sind natürlich keine Punkte im streng mathematischen Sinne, sondern weisen eine endliche Ausdehnung auf, so dass jeder Kontaktstift über eine kleine Kontaktfläche verfügt, die bevorzugt höchstens 10 cm² beträgt, besonders bevorzugt höchstens 4 cm². Die Gesamtheit aller Kontaktflächen ist aber wesentlich kleiner als die Ausdehnung der Glasscheibe. Der Anteil der Glasscheibenoberfläche, der mit den Auflagestiften in direktem Kontakt steht, beträgt beispielsweise unter 10 %. Die Auflagestifte können Öffnungen aufweisen, über die eine Saugwirkung auf die Glasscheibe übertragen werden kann, um sie an die Auflagestifte anzusaugen.

Die Anzahl und die Abstände der Auflagestifte kann vom Fachmann gemäß der Komplexität der Scheibenbiegung geeignet gewählt werden. So sind bei Scheiben mit relativ einfacher Biegung wenige Auflagestifte ausreichend, während komplexere Biegungen mit kleinen lokalen Krümmungsradien und einer Mehrzahl unterschiedlich gekrümmter Bereiche durch eine größere Anzahl von Auflagestiften realisiert werden können. Bevorzugt sollte die Stützform mindestens fünf Auflagestifte aufweisen, wobei vier Auflagestifte den Eckbereichen der Glasscheibe zugeordnet sind und ein Auflagestift der Scheibenmitte zugeordnet ist. Die Anzahl der Auflagestifte hängt von der Größe und Geometrie der Scheibe im Einzelfall ab und kann vom Fachmann entsprechend gewählt werden. Es sollten ausreichend Auflagestifte eingesetzt werden, so dass es nicht zu einer lokalen Gegenbiegung des Glases kommt.

In einer besonders vorteilhaften Ausgestaltung sind mindestens zwei der Auflagestifte aktiv beheizbar, bevorzugt mehrere Auflagestifte besonders bevorzugt mindestens drei Auflagestifte und ganz besonders bevorzugt mindestens 5 Auflagestifte. Die Auflagestifte können dazu beispielsweise mit Heizspulen ausgestattet sein. Durch die beheizbaren Auflagestifte kann der aufgelegte Schichtstapel im Bereich der Kontaktpunkte erhitzt werden. Bei geeigneter Temperatur kann so eine punktuelle Verklebung der beiden Glasscheiben über die thermoplastische Folie erreicht werden. Durch das Verkleben an zwei Punkten ist der Schichtstapel gegen Verrutschen gesichert. Eine größere Anzahl von beheizbaren Auflagestiften erhöht die Stabilität des Schichtstapels weiter. Es kann dabei vorteilhaft sein, einen zusätzlichen mechanischen Anpressdruck von oben auszuüben. So wird ein Vorverbund hergestellt, der die auf der Stützform erreichte Gestalt des Schichtstapels fixiert. Der Schichtstapel kann dann von der Stützform abgenommen werden und unabhängig von der Stützform, gegebenenfalls nach zusätzlichen Bearbeitungsschritten, zur Verbundglasscheibe laminiert werden.

Ein Vorteil der Auflagestifte gegenüber einer Auflagefläche besteht darin, dass dieselbe Stützform an verschiedene Scheibenformen angepasst werden kann und daher vielseitiger einsetzbar ist. Dazu sind in einer vorteilhaften Ausgestaltung die Auflagestifte unabhängig voneinander entlang ihrer Erstreckungsrichtung bewegbar. Dadurch kann ihre Höhe verändert werden. Ebenso ist es vorteilhaft, zumindest einen Teil der Auflagestifte oder alle Auflagestifte in der Ebene senkrecht zu ihrer Erstreckungsrichtung bewegbar auszubilden. Dadurch ihre relative Position auf der Scheibe verändert und an die Geometrie der zu erzeugenden Verbundglasscheibe angepasst werden.

Die Auflagestifte sind daher in einer bevorzugten Ausgestaltung unabhängig voneinander bewegbar, und zwar in ihrer Erstreckungsrichtung und/oder senkrecht zu ihrer Erstreckungsrichtung. Die Stützform ist bevorzugt mit Mitteln zum Bewegen der Auflagestifte ausgestattet, beispielsweise mit Gewindespindeln oder Stellmotoren zum Verschieben der Auflagestifte oder mechanische, hydraulische oder pneumatische Mittel zum Heben und Senken der Auflagestifte. Die Stützform kann auf eine Scheibenform eingestellt werden, indem die Auflagestifte so bewegt werden, dass ihre Kontaktpunkte eine Fläche aufspannen, die der Scheibenform entspricht. Die Bewegung der Auflagestifte kann manuell oder automatisiert erfolgen. So ist es denkbar, dass im Rahmen einer industriellen Massenfertigung die geometrischen Werte der Scheibe in eine Software eingelesen werden, welche ihrerseits die Auflagestifte ansteuert und die Stützform an die Scheibengeometrie anpasst.

Hinsichtlich des Materials der Stützform, insbesondere der Kontaktfläche beziehungsweise der Auflagestifte, bestehen keine Einschränkungen, solange die Stützform stabil genug ist um den Schichtstapel zu tragen. Da keine Heißbiegung auf der Stützform stattfindet, muss sie auch nicht hitzebeständig sein. Die Materialien können daher vom Fachmann im Einzelfall frei gewählt werden. Geeignete Materialien sind beispielsweise Metalle oder Legierungen wie Stahl oder Aluminium, aber auch Holz oder Kunststoffe.

Die dünne erste Glasscheibe weist bevorzugt eine Dicke von 0,2 mm bis 1,0 mm auf, besonders bevorzugt 0,4 mm bis 0,7 mm. So dünne Glasscheiben lassen sich gut kaltbiegen. Die erste Glasscheibe kann gehärtet sein, um ihre Bruchfestigkeit zu erhöhen, was die Handhabung beim Kaltbiegen einfacher macht. Da Glasscheiben mit diesen geringen Dicken nicht oder nur sehr schwer thermisch vorgespannt werden können, ist die erste Glasscheibe bevorzugt chemisch vorgespannt.

Die erste Glasscheibe besteht bevorzugt aus einer Glassorte, die sich gut chemisch vorspannen lässt. Die erste Glasscheibe ist daher bevorzugt aus Aluminosilikatglas gefertigt, insbesondere aus Alkali-Aluminosilikatglas. Das chemische Vorspannen erfolgt durch Austausch kleinerer gegen größere Alkali-Ionen (beispielsweise Natrium- gegen Kaliumionen), wodurch tiefenabhängige Druckspannungen erzeugt werden. Außerdem zeichnet sich diese Glassorte durch hohe Kratzfestigkeit und Härte aus.

Die zweite Glasscheibe ist bevorzugt aus Kalk-Natron-Glas gefertigt, das als Fensterglas üblich und daher weit verbreitet und vergleichsweise kostengünstig ist. Grundsätzlich kann die zweite Glasscheibe aber auch aus anderen Glassorten gefertigt sein. Die Dicke der zweiten Glasscheibe beträgt bevorzugt von 1,5 mm bis 5 mm. Eine zweite Scheibe mit diesen Dicken ergibt mit der dünnen ersten Glasscheibe ein Verbundglas, welches sich hinsichtlich seiner Stabilität und Gesamtdicke als Fahrzeugverglasung eignet.

Die thermoplastische Folie enthält bevorzugt Polyvinylbutyral (PVB), Ethylvinylacetat (EVA) oder Polyurethan (PU), besonders bevorzugt PVB. Sie weist bevorzugt eine Dicke von 0,2 bis 2 mm auf, insbesondere 0,5 mm bis 1,6 mm.

Das Verbinden der Glasscheiben über die thermoplastische Zwischenschicht kann durch alle gängigen Laminationsverfahren erfolgen. Das Laminieren erfolgt typischerweise unter Einwirkung von Temperatur, Druck und/oder Vakuum. Bevorzugt umfasst das Laminieren ein Entlüften des Schichtstapel, wobei ein Unterdruck angelegt wird, um Luft aus dem Zwischenraum zwischen den Glasscheiben und der thermoplastischen Folien zu entfernen, und ein Erwärmen des Schichtstapels, wobei die thermoplastische Folie erweicht und die adhäsive Verbindung zu den Scheibenoberfläche herstellt.

Zum Entlüften können beispielsweise Vakuumsackverfahren angewendet werden, bei denen der Schichtstapel in einem Sack angeordnet wird, in dem dann ein Unterdruck erzeugt wird. Alternativ können Vakuumringverfahren angewendet werden, bei denen die Seitenkante mit einem umlaufenden Schlauch versehen wird, in dem ein Unterdruck erzeugt wird. Das Erzeugen der endgültigen adhäsiven Verbindung kann in einem Autoklaven erfolgen, in dem der entlüftete Schichtstapel bevorzugt erhitzt und mit Überdruck beaufschlagt wird.

Das Laminieren kann auf der Stützform erfolgen, wo die gebogene Form stabilisiert wird. Die Scheibe kann aber auch zum Laminieren von der Stützform abgenommen werden, sofern die gebogene Form durch andere Maßnahmen stabilisiert wird, beispielsweise durch das vorstehend beschriebene lokale Verkleben durch beheizte Auflagestifte.

Das erfindungsgemäße Verfahren kann durchgeführt werden mit einer Vorrichtung zur Herstellung einer Verbundglasscheibe, umfassend eine Stützform, welche die gewünschte endgültige Form der Verbundglasscheibe festlegt, und ein Mittel zum Laminieren der Verbundglasscheibe. Die vorstehend im Zusammenhang mit dem erfindungsgemäßen Verfahren ausgeführten vorteilhaften Ausgestaltungen gelten in gleicher Weise für die Vorrichtung.

Die erfindungsgemäß hergestellte Verbundglasscheibe kann verwendet werden als Fensterscheibe eines Fahrzeugs, beispielsweise als Windschutzscheibe, Seitenscheibe, Rückscheibe oder Dachscheibe. Dabei bildet die dünne erste Glasscheibe bevorzugt die Innenscheibe der Verbundglasscheibe und ist dem Fahrzeuginnenraum zugewandt, während die dickere zweite Glasscheibe der äußeren Umgebung zugewandt ist.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung der Stützform, die beim erfindungsgemäßen Verfahren verwendet wird, mit der aufgelegten ersten Glasscheibe,
- Fig. 2: einen Querschnitt durch die Stützform gemäß Figur 1,
- Fig. 3: eine Draufsicht auf eine weitere Ausgestaltung der Stützform mit der aufgelegten ersten Glasscheibe,
- Fig. 4: einen Querschnitt durch die Stützform gemäß Figur 3,
- Fig. 5: einen Querschnitt durch die Stützform gemäß Figur 3 mit dem gesamten aufgelegten Schichtstapel vor dem Laminieren,
- Fig. 6: ein Ausführungsbeispiel des erfindungsgemäßen Verfahrens anhand eines Flussdiagramms.

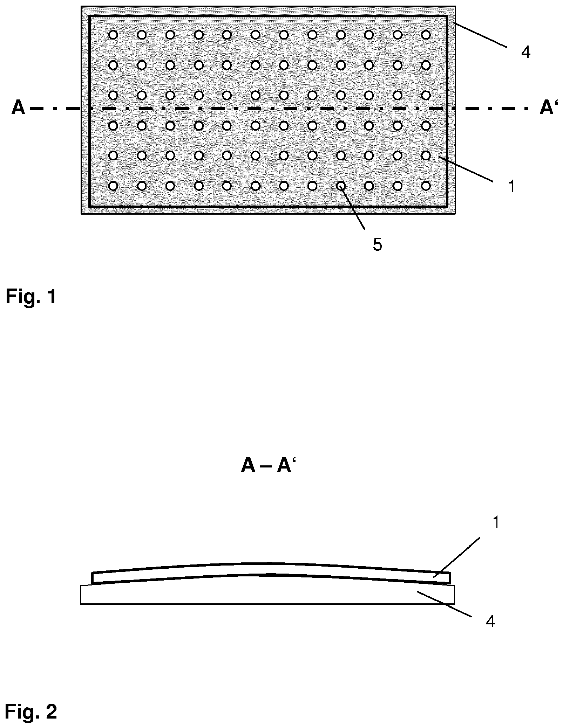

Fig. 1 und Fig. 2 zeigen je ein Detail einer Ausgestaltung der Stützform 4, die beim erfindungsgemäßen Verfahren verwendet wird. Die Stützform 4 weist eine im Wesentlichen vollflächige Kontaktfläche auf, die lediglich durch kleine Öffnungen 5 unterbrochen ist. Eine erste Glasscheibe 1 ist auf der Kontaktfläche der Stützform 4 angeordnet. Die erste Glasscheibe 1 ist beispielsweise eine 0,6 mm dicke, chemisch vorgespannte Scheibe aus Aluminosilikatglas.

Die konvexe Kontaktfläche der Stützform 4 weist eine Krümmung auf, die der gewünschten Krümmung der Verbundglasscheibe entspricht. Die erste Glasscheibe 1 ist im Ausgangszustand plan, passt sich aufgrund ihrer geringen Dicke und der damit verbundenen Flexibilität an die Kontaktfläche an und wird bei Umgebungstemperatur ohne aktive Beheizung gebogen (kaltgebogen).

Die Öffnungen 5 können mit einem Mittel zur Erzeugung eines Unterdrucks verbunden sein, beispielsweise einem Ventilator oder einer Vakuumpumpe. Dadurch kann eine Saugwirkung erzeugt werden, durch welche die erste Glasscheibe 1 an die Kontaktfläche der Stützform 4 angesaugt wird.

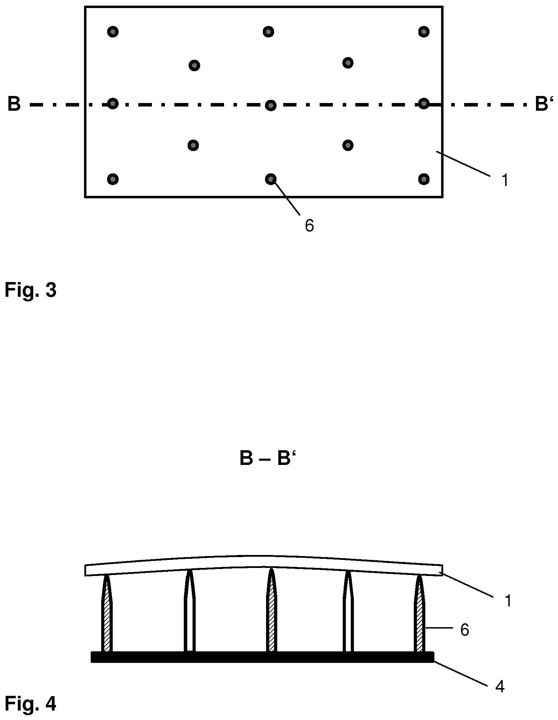

Fig. 3 und Fig. 4 zeigen je ein Detail einer weiteren Ausgestaltung der Stützform 4. Die Stützform 4 weist in dieser Ausgestaltung keine großflächige Kontaktfläche auf, sondern eine Vielzahl von Auflagestiften 6. Die oberen Enden der Auflagestifte 6 spannen eine gekrümmte Fläche auf, deren Krümmung der gewünschten Krümmung der Verbundglasscheibe entspricht. Eine erste Glasscheibe 1 liegt auf jedem Auflagestift 6 im Wesentlichen punktuell auf, ein großflächiger direkter Kontakt zwischen Stützform und Glasscheibe 1 wird vermieden.

Sind einige oder alle Auflagestifte 6 beheizbar, so kann der Schichtstapel lokal im Bereich der Auflagepunkte verklebt werden. Dadurch kann eine lokale Verklebung erzeugt werden, so dass eine Art Vorverbund entsteht und der Schichtstapel in seiner gebogenen Form stabilisiert ist und von der Stützform 4 abgenommen werden kann.

Durch eine vertikale Verschiebung der Auflagestifte 6 gegeneinander kann die Krümmung verändert werden. So kann dieselbe Stützform 4 zur Herstellung verschiedenartiger Verbundglasscheiben verwendet werden.

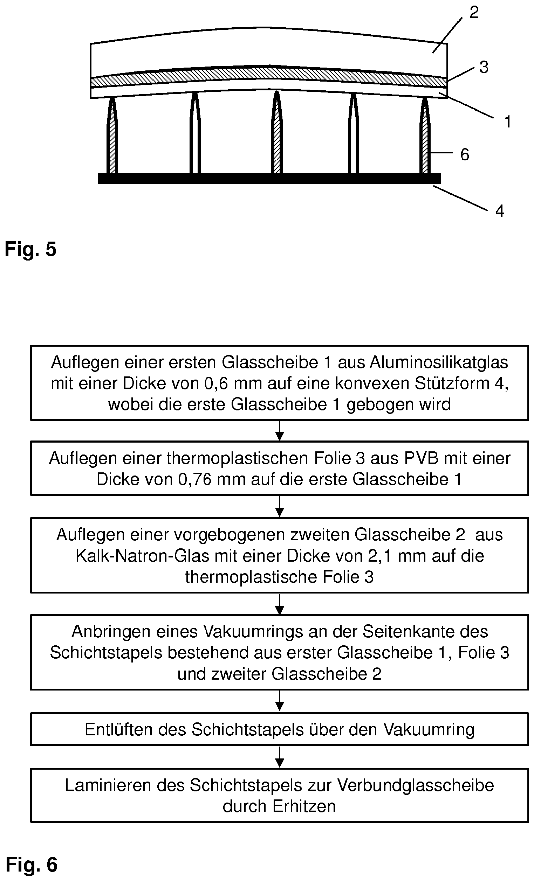

Fig. 5 zeigt einen Querschnitt durch einen Schichtstapel zur Lamination auf einer Stützform 4 wie in Figur 4. Außer der ersten Glasscheibe 1 auf den Auflagestiften 6 umfasst der Schichtstapel eine thermoplastische Folie 3 auf der ersten Glasscheibe 1 und eine zweite Glasscheibe 2 auf der thermoplastischen Folie 3. Die thermoplastische Folie 3 ist beispielsweise eine 0,76 mm dicke PVB-Folie. Die zweite Glasscheibe 2 ist beispielsweise eine 2,1 mm dicke Scheibe aus Kalk-Natron-Glas. Die zweite Glasscheibe 2 ist aufgrund ihrer Dicke nicht ausreichend flexibel, um kaltgebogen werden zu können und ist daher bereits mittels herkömmlicher Heißbiegeverfahren in die endgültige Form vorgebogen, beispielsweise mittels Pressbiegen.

Durch die Stützform 4 wird ein gleichmäßiger Anpressdruck innerhalb des Schichtstapels sichergestellt. Die anschließende Laminierung führt zu einer Verbundglasscheibe mit hoher optischer Qualität und ohne kritische Tendenzen zur Delamination.

Fig. 6 zeigt ein Ausführungsbeispiel des erfindungsgemäßen Verfahrens zur Herstellung einer Verbundglasscheibe anhand eines Flussdiagramms.

### Bezugszeichenliste:

- (1): erste Glasscheibe
- (2): zweite Glasscheibe
- (3): thermoplastische Folie
- (4): Stützform
- (5): Öffnung in der Auflagefläche der Stützform 4
- (6): Auflagestift der Stützform 4

- A-A': Schnittlinie
- B-B': Schnittlinie

## Patentansprüche

1. Verfahren zur Herstellung einer Verbundglasscheibe, mindestens umfassend:
- Auflegen einer ersten Glasscheibe (1) mit einer Dicke von kleiner oder gleich 1 mm auf eine Stützform (4), wobei die erste Glasscheibe (1) in eine durch die Stützform (4) festgelegte Form gebogen wird;
- Auflegen mindestens einer thermoplastischen Folie (3) auf die erste Glasscheibe (1);
- Auflegen einer gebogenen zweiten Glasscheibe (2) mit einer Dicke von größer oder gleich 1,5 mm auf die thermoplastische Folie (3); und
- Verbinden der ersten Glasscheibe (1) mit der zweiten Glasscheibe (2) über die thermoplastische Folie (3) zu einer Verbundglasscheibe durch Lamination.

2. Verfahren nach Anspruch 1, wobei die Stützform (4) konvex ausgebildet ist.

3. Verfahren nach Anspruch 1 oder 2, wobei die Stützform (4) eine Auflagefläche aufweist, mit der die erste Glasscheibe (1) im Wesentlichen vollflächig in Kontakt steht.

4. Verfahren nach Anspruch 1 oder 2, wobei die Stützform (4) eine Mehrzahl von Auflagestiften (6) aufweist, auf denen die erste Glasscheibe (1) im Wesentlichen punktuell aufliegt.

5. Verfahren nach Anspruch 4, wobei die Stützform (4) mindestens fünf Auflagestifte (6) aufweist.

6. Verfahren nach Anspruch 4 oder 5, wobei mindestens zwei Auflagestifte (6) beheizbar sind.

7. Verfahren nach einem der Ansprüche 4 bis 6, wobei die Auflagestifte (6) unabhängig voneinander bewegbar sind.

8. Verfahren nach einem der Ansprüche 1 bis 7, wobei die erste Glasscheibe (1) durch Anlegen eines Unterdrucks an die Stützform angesaugt und dadurch gebogen wird.

9. Verfahren nach einem der Ansprüche 1 bis 8, wobei die erste Glasscheibe (1) chemisch vorgespannt ist.

10. Verfahren nach einem der Ansprüche 1 bis 9, wobei die erste Glasscheibe (1) aus Aluminosilikatglas und die zweite Glasscheibe (2) aus Kalk-Natron-Glas gefertigt ist.

11. Verfahren nach einem der Ansprüche 1 bis 10, wobei die thermoplastische Folie (3) Polyvinylbutyral (PVB), Ethylvinylacetat (EVA) oder Polyurethan (PU) enthält.

12. Verfahren nach einem der Ansprüche 1 bis 11, wobei die zweite Glasscheibe (2) eine Dicke von 1,5 mm bis 5 mm aufweist.

13. Verfahren nach einem der Ansprüche 1 bis 12, wobei die erste Glasscheibe (1) eine Dicke von 0,2 mm bis 1,0 mm aufweist.

## Claims

1. Method for producing a composite glass pane, at least comprising:
- placing a first glass pane (1) having a thickness less than or equal to 1 mm on a support mould (4), wherein the first glass pane (1) is curved into a shape determined by the support mould (4);
- placing at least one thermoplastic film (3) on the first glass pane (1);
- placing a curved second glass pane (2) having a thickness greater than or equal to 1.5 mm on the thermoplastic film (3); and
- joining the first glass pane (1) to the second glass pane (2) via the thermoplastic film (3) to form a composite glass pane by lamination.

2. Method according to claim 1, wherein the support mould (4) is convex.

3. Method according to claim 1 or 2, wherein the support mould (4) has a support surface, with which the first glass pane (1) makes substantially full-surface contact.

4. Method according to claim 1 or 2, wherein the support mould (4) has a plurality of support pins (6), on which the first glass pane (1) rests in a substantially point-wise manner.

5. Method according to claim 4, wherein the support mould (4) has at least five support pins (6).

6. Method according to claim 4 or 5, wherein at least two support pins (6) are heatable.

7. Method according to one of claims 4 through 6, wherein the support pins (6) are movable independently of one another.

8. Method according to one of claims 1 through 7, wherein the first glass pane (1) is sucked against the support mould by application of a negative pressure and is thus curved.

9. Method according to one of claims 1 through 8, wherein the first glass pane (1) is chemically tempered.

10. Method according to one of claims 1 through 9, wherein the first glass pane (1) is made of aluminosilicate glass and the second glass pane (2) of soda lime glass.

11. Method according to one of claims 1 through 10, wherein the thermoplastic film (3) contains polyvinyl butyral (PVB), ethylene vinyl acetate (EVA), or polyurethane (PU).

12. Method according to one of claims 1 through 11, wherein the second glass pane (2) has a thickness of 1.5 mm to 5 mm.

13. Method according to one of claims 1 through 12, wherein the first glass pane (1) has a thickness of 0.2 mm to 1.0 mm.

## Revendications

1. - Procédé de fabrication d'une vitre en verre feuilleté, comportant au moins :
- placer une première feuille de verre (1) ayant une épaisseur inférieure ou égale à 1 mm sur un moule de support (4), la première feuille de verre (1) étant cintrée dans une forme déterminée par le moule de support (4) ;
- placer au moins un film thermoplastique (3) sur la première feuille de verre (1) ;
- placer une seconde feuille de verre (2) cintrée ayant une épaisseur supérieure ou égale à 1,5 mm sur le film thermoplastique (3) ; et
- réunir la première feuille de verre (1) avec la seconde feuille de verre (2) par l'intermédiaire du film thermoplastique (3) en une vitre en verre feuilleté par lamination.

2. - Procédé selon la revendication 1, dans lequel le moule de support (4) est réalisé convexe.

3. - Procédé selon l'une des revendications 1 ou 2, dans lequel le moule de support (4) présente une surface de support avec laquelle la première feuille de verre (1) établit un contact pratiquement sur toute la surface.

4. - Procédé selon l'une des revendications 1 ou 2, dans lequel le moule de support (4) présente une pluralité de broches de support (6) sur lesquelles la première feuille de verre (1) repose d'une manière sensiblement par points.

5. - Procédé selon la revendication 4, dans lequel le moule de support (4) présente au moins cinq broches de support (6).

6. - Procédé selon l'une des revendications 4 ou 5, dans lequel au moins deux broches de support (6) sont aptes à être chauffées.

7. - Procédé selon l'une des revendications 4 à 6, dans lequel les broches de support (6) sont déplaçables indépendamment les unes des autres.

8. - Procédé selon l'une des revendications 1 à 7, dans lequel la première feuille de verre (1) est aspirée contre le moule de support par l'application d'une dépression et est ainsi cintrée.

9. - Procédé selon l'une quelconque des revendications 1 à 8, dans lequel la première feuille de verre (1) est trempée chimiquement.

10. - Procédé selon l'une des revendications 1 à 9, dans lequel la première feuille de verre (1) est fabriquée en verre d'aluminosilicate et la seconde feuille de verre (2) est fabriquée en verre sodocalcique.

11. - Procédé selon l'une des revendications 1 à 10, dans lequel le film thermoplastique (3) contient du poly(vinyl butyral) (PVB), de l'éthylène-acétate de vinyle (EVA) ou du polyuréthane (PU).

12. - Procédé selon l'une des revendications 1 à 11, dans lequel la seconde feuille de verre (2) présente une épaisseur de 1,5 mm à 5 mm.

13. - Procédé selon l'une des revendications 1 à 12, dans lequel la première feuille de verre (1) présente une épaisseur de 0,2 mm à 1,0 mm.
